# EUROPÄISCHE PATENTSCHRIFT

(11) **EP 4 566 163 B1**
(45) Veröffentlichungstag und Bekanntmachung des Hinweises auf die Patenterteilung: **08.04.2026**
(21) Anmeldenummer: 23749082.6
(22) Anmeldetag: 01.08.2023
(51) Int. Cl.: H02S 20/21, E01F 8/00

(54) **LÄRMSCHUTZWAND**
NOISE BARRIER WALL
PAROI DE BARRIÈRE ANTI-BRUIT

(30) Priorität: 02.08.2022 DE 102022207970
(43) Veröffentlichungstag der Anmeldung: 11.06.2025
(73) Patentinhaber: Fraunhofer-Gesellschaft zur Förderung der angewandten Forschung e.V., 80686 München (DE)
(72) Erfinder: BASLER, Felix, 79110 Freiburg (DE); HUYENG, Jonas, 79110 Freiburg (DE)
(74) Vertreter: Friese Goeden Patentanwälte PartGmbB
(86) Internationale Anmeldenummer: PCT/EP2023/071229
(87) Internationale Veröffentlichungsnummer: WO 2024/028292

(56) Entgegenhaltungen:
- DE-U1- 202021 104 937
- JP-A- 2003 239 226
- JP-A- 2010 121 401
- JP-A- 2010 229 770
- KR-A- 20110 006 317
- KR-A- 20110 107 012
- KR-A- 20130 027 244

## Beschreibung

Die Erfindung betrifft eine Lärmschutzwand mit einem plattenförmigen Grundkörper, welcher mit schallabsorbierendes Material versehen ist. Solche Lärmschutzwände werden beispielsweise entlang von Verkehrswegen eingesetzt, um die Schallemissionen in die Umgebung zu reduzieren.

Herkömmliche photovoltaische Module, abgekürzt "PV-Module", nutzen eine Glasplatte als äußerste Schicht, um die in Polymerfolien eingekapselten, üblicherweise als "Solarzellen" bezeichneten photoaktiven Bauelemente zu schützen. Für Lärmschutzwände, bei welchen ein signifikanter Teil der Energie einfallender Schallwellen absorbiert werden soll, ist der großflächige Einsatz von Glas in der normalerweise bei PV-Modulen eingesetzten Stärke nicht möglich, da dieses Glas quasi schallhart ist und die Energie daher reflektiert statt zu absorbieren.

In Lärmschutzwänden werden häufig poröse schallabsorbierende Materialien (kurz: "Absorber") genutzt, in denen die Schallwellen gestreut werden und dabei Energie verlieren. Diese Absorber werden in der Regel durch metallische Kassetten, sogenannte "Absorberkassetten", eingefasst und und damit mechanisch stabilisiert. Vor die Absorberkassetten lässt sich aber kein herkömmliches PV-Modul integrieren, ohne die schallabsorbierende Wirkung des Absorbers aufzuheben.

Bei manchen bekannten Lärmschutzwänden werden herkömmliche PV-Module genutzt und in herkömmliche Lärmschutzwände integriert, wobei die Integration der PV-Module durch mechanische Anbindung erfolgt. Diese kann z.B. gesteckt, geklebt oder verschraubt sein. Durch die Integration herkömmlicher PV-Module in herkömmliche Lärmschutzwände wird deren schallabsorbierende Wirkung aber erheblich reduziert.

Bei einigen anderen bekannten Lärmschutzwänden sind angepasste PV-Module auf angepasste Absorberkassetten aufgebracht. Dabei hat die Absorberkassette einen dreieckigen Querschnitt, bei dem eine Seite vertikal verläuft, eine Seite nach oben ausgerichtet und die andere Seite nach unten ausgerichtet ist. Die PV-Module sind auf die nach oben ausgerichtete Seite der Absorberkassette aufgelegt. Hierbei liegt also das PV-Modul vor der Absorberkassette und die Absorberkassette bildet den Grundkörper der Lärmschutzwand, die häufig aber nicht ausschließlich vertikal ausgerichtet ist.

Bei einer anderen bekannten Lärmschutzwand werden keine PV-Module eingesetzt, sondern durchsichtige Materialien, wie z. B. Glas oder Acrylglas, um eine Transparenz oder Transluzenz der Wand zu ermöglichen. Da diese Materialien in den aus Sicherheitsgründen benötigten Stärken ebenfalls schallhart sind wird zur Erzielung einer schallabsorbierenden Wirkung die Einfassung der durchsichtigen Scheiben, die größtenteils eine nicht absorbierende Fläche darstellen, aus einem Rahmen gebildet, der ebenfalls die Merkmale einer Absorberkassette aufweist. Hierbei fasst der Rahmen die nicht-absorbierende Fläche ein und ist ausschließlich im Perimeter der nicht-absorbierenden Fläche zu finden. Photoaktive Eigenschaften hat diese Lärmschutzwand jedoch nicht.

DE 20 2021 104 931 U1 offenbart ein Lärmschutzelement als Bestandteil von wand- und/oder wallartigen Lärmschutzeinrichtungen, das Lärmschutzelement bestehend aus einer Grundstruktur mit einer Vielzahl von vertikal und voneinander beabstandet angeordneten Trägerelementen, zwischen denen jeweils mindestens ein Lärmschutzelement angeordnet und fest mit den Trägerelementen verbunden ist und mindestens einem Photovoltaik-Element, welches als integraler Bestandteil mit dem Lärmschutzelement verbunden ist.

KR 2011 0 006 317 A offenbart ein photovoltaisches schalldämmendes Paneel und eine schalldämmende Wand, in der das Paneel integriert ist.

JP 2003 239 226 A offenbart ein schallabsorbierendes Paneel mit durchsichtigen Bereichen.

JP 2010 229 770 A offenbart ein schallabsorbierendes durchsichtiges Paneel zur Stromerzeugung.

KR 2013 0 027 244 A und KR 2011 0 107 012 A offenbaren ein schallabsorbierendes Paneel zur Stromerzeugung.

JP 2010 121 401 A offenbart ein schallabsorbierendes Paneel mit lichtdurchlässigen Eigenschaften.

Vor diesem Hintergrund ist es die Aufgabe der Erfindung, eine gattungsgemäße Lärmschutzwand zur kombinierten Schallabsorption und Solarstromgewinnung so zu gestalten, dass ihre Herstellung einfacher und kostengünstiger als bisher ist und gleichzeitig eine höhere mechanische Stabilität und eine bessere Schallabsorption als bisher erzielt werden.

Die Aufgabe wird erfindungsgemäß durch eine Lärmschutzwand gemäß Anspruch 1 gelöst. Vorteilhafte Weiterbildungen der Erfindung finden sich in den Unteransprüchen.

Erfindungsgemäß wird eine Lärmschutzwand zur kombinierten Schallabsorption und Solarstromgewinnung vorgeschlagen. Diese weist einen plattenförmigen Grundkörper auf. In diesen Grundkörper sind eine Vielzahl von Solarzellen eingekapselt.

Darüber hinaus trägt der Grundkörper auf wenigstens einer Seite mindestens eine Absorberkassette, welche mit schallabsorbierendem Material gefüllt ist.

Weiterhin weist die Lärmschutzwand Mittel zum Aneinander-Befestigen des Grundkörpers und der Absorberkassette auf. Der Grundkörper besitzt zumindest einen lichtdurchlässigen Oberflächenabschnitt. Dieser ist so ausgestaltet, dass auf zumindest einer Seite des Grundkörpers einfallendes Licht zu wenigstens einem Teil der eingekapselten Solarzellen gelangen kann.

Die Aufgabe der Erfindung wird dadurch gelöst, dass die Absorberkassette angrenzend an den lichtdurchlässigen Oberflächenabschnitt am Grundkörper anliegend angeordnet ist und einen weiteren Oberflächenabschnitt des Grundkörpers abdeckt, der in der gleichen Ebene wie der lichtdurchlässige Oberflächenabschnitt liegt.

Im Unterschied zu bekannten Lärmschutzwänden, bei denen Absorberkassetten und PV-Module kombiniert sind, bildet bei der erfindungsgemäßen Lärmschutzwand das PV-Modul den Grundkörper der Wand und die Absorberkassette ist vor das PV-Modul gesetzt. Die erfindungsgemäße Lärmschutzwand ermöglicht daher einen schnellen und unkomplizierten Aufbau, bei gleichzeitig hoher mechanischer Stabilität, hoher Schallabsorption und Dauerhaftigkeit. Durch den modularen Aufbau kann die Lärmschutzwand an den Standort angepasst werden.

Erfindungsgemäß unterscheidet sich der Grundkörper bzw. das PV-Modul von herkömmlichen PV-Modulen in zwei Aspekten: Zum einen werden bei der Belegung der Modulfläche absichtlich zusätzliche photo-inaktive Flächen belassen. Zum anderen wird das PV-Modul zusätzlich mit schallabsorbierenden Elementen kombiniert, so dass beim Einsatz in einer Lärmschutzwand eine erhöhte schallabsorbierende Wirkung des Produkts umgesetzt wird.

In einigen Ausführungsformen der Erfindung sind wenigstens zwei im seitlichen Abstand voneinander angeordnete Absorberkassetten angrenzend an den lichtdurchlässigen Oberflächenabschnitt am Grundkörper anliegend angeordnet sind und decken jeweils einen jeweiligen Oberflächenabschnitt des Grundkörpers ab, wobei die von den Absorberkassetten abgedeckten Oberflächenabschnitte in der gleichen Ebene liegen wie der lichtdurchlässige Oberflächenabschnitt, der sich zwischen zwei benachbarten Absorberkassetten befindet.

Die erfindungsgemäße Lärmschutzwand ist sehr gut skalierbar, zuverlässig und kostengünstiger als bekannte Lärmschutzwände zur kombinierten Schallabsorption und Solarstromgewinnung.

In einigen Ausführungsformen der Erfindung sind mehr als zwei seitlich voneinander beabstandete Absorberkasetten am Grundkörper anliegend angeordnet, wobei jede Absorberkassette einen jeweiligen Oberflächenabschnitt des Grundkörpers abdeckt und mehrere lichtdurchlässige Oberflächenabschnitte vorgesehen sind, die in der gleichen Ebene wie die von den Absorberkassetten abgedeckten Oberflächenabschnitte liegen, wobei sich zwischen jeweils zwei benachbarten Absorberkassetten einer der lichtdurchlässigen Oberflächenabschnitte befindet.

In einigen Ausführungsformen der Erfindung weist der Grundkörper einen oder zwei sich gegenüberliegende seitliche Randabschnitte auf und ist zwischen dem oder jedem seitlichen Rand und der benachbarten Absorberkassette ein lichtdurchlässiger seitlicher Oberflächenabschnitt angeordnet, und grenzt der oder jeder seitliche lichtdurchlässige Oberflächenabschnitt an einen von einer Absorberkassette abgedeckten Oberflächenabschnitt, wobei der oder die seitlichen lichtdurchlässigen Oberflächenabschnitte in der gleichen Ebene liegt bzw. liegen wie der oder die von dem oder den Absorberkassetten abgedeckten Oberflächenabschnitte des Grundkörpers.

Die Vereinfachung des Zusammenbaus der erfindungsgemäßen Lärmschutzwand wird in einigen Ausführungsformen der Erfindung insbesondere dadurch erzielt, dass die oder jede Absorberkassette durch Kleben und/oder Klemmen an dem Grundkörper befestigt ist. Für die Klemmbefestigung ist es vorteilhaft, wenn der Grundkörper von einem Rahmen umgeben ist, der die oder jede Absorberkassette am Grundkörper festklemmt. Dieser Rahmen ist ein bevorzugtes Mittel zum Aneinander-Befestigen von Grundkörper und Absorberkassette.

Um den Lichteinfall auf die Lärmschutzwand besser als bisher für die Solarstromerzeugung zu nutzen und gleichzeitig einen besseren Lärmschutz als bisher zu erzielen, ist es vorteilhaft, wenn die oder jede Absorberkassette im Querschnitt rechteckig, dreieckig, sechseckig oder trapezförmig ist. Dafür ist es auch günstig, wenn die oder jede Absorberkassette an ihrer dem Grundkörper zugekehrten Basis einen innenliegenden oder außenliegenden Falz hat, der mit dem Grundkörper in Anlage ist.

In einigen Ausführungsformen der Erfindung kann der Grundkörper zwei lichtdurchlässige Schichten aufweisen, von denen eine Schicht die Oberfläche des Grundkörpers auf dessen eine Seite beinhaltet und von denen die andere Schicht die Oberfläche des Grundkörpers auf dessen gegenüberliegenden Seite beinhaltet, und zwischen den beiden Schichten eine Schicht von Solarzellen eingekapselt ist, wobei jede Solarzelle einer ersten Teilmenge von Solarzellen beidseitig photoaktiv ist und jeweils in einem ersten Bereich des Grundkörpers angeordnet ist, der jeweils seitlich neben dem oder jedem abgedeckten Oberflächenabschnitt liegt, und wobei jede Solarzelle einer zweiten Teilmenge von Solarzellen einseitig photoaktiv ist und jeweils in einem zweiten Bereich des Grundkörpers angeordnet sind, der von der oder jeder Absorberkassette verdeckt ist.

Alternativ weist der Grundkörper zwei lichtdurchlässige Schichten auf, von denen eine Schicht die Oberfläche des Grundkörpers auf dessen eine Seite beinhaltet und von denen die andere Schicht die Oberfläche des Grundkörpers auf dessen gegenüberliegenden Seite beinhaltet, und sind zwischen den beiden Schichten zwei Schichten von Solarzellen eingekapselt , wobei jede Solarzelle der einen Schicht von Solarzellen ein- oder beidseitig photoaktiv ist und jeweils in einem ersten Bereich des Grundkörpers angeordnet ist, der jeweils seitlich neben dem oder jedem abgedeckten Oberflächenabschnitt liegt, und wobei jede Solarzelle der anderen Schicht von Solarzellen ein- oder beidseitig photoaktiv ist und jeweils in einem zweiten Bereich des Grundkörpers angeordnet ist, der zwischen der einen Schicht von Solarzellen und der anderen lichtdurchlässigen Schicht liegt.

Die erfindungsgemäße Lärmschutzwand ist sehr gut skalierbar. In einigen Ausführungsformen der Erfindung ist daher die Lärmschutzwand durch Verbinden mit wenigstens einer identisch ausgebildeten, weiteren Lärmschutzschutzwand erweiterbar. Die Lärmschutzwand kann aber auch Teil einer Mehrzahl von miteinander verbundenen identischen Lärmschutzwänden sein.

Im Einsatz ist die Lärmschutzwand vorzugsweise vertikal ausgerichtet, wobei sich die Absorberkassetten der Länge nach ebenfalls vertikal erstrecken und parallel zueinander angeordnet sind. Unter einer vertikalen Ausrichtung der Lärmschutzwand kann eine leichte Neigung im Bereich von etwa ± 15° oder ± 10° oder ± 8°aus der Senkrechten verstanden werden.

Ausführungsbeispiele der Erfindung nutzen ein angepasstes PV-Modullayout, basierend auf herkömmlichen Materialien und Fertigungsprozessen und kombinieren es mit einer geeigneten Ausgestaltung der Absorberkassetten, um photoaktive und schallabsorbiernde Flächen in einem Bauelement zu kombinieren. Dabei werden die beiden Teilelemente durch ein Rahmensystem kombiniert, das insbesondere durch Klemmung, alternativ aber auch durch Klebung oder einer anderen Verbindungstechnik, eine dauerhafte zwischen den beiden Teilelementen herstellt. Das Rahmensystem basiert im einfachsten Fall ebenfalls auf herkömmlichen Rahmensystemen für PV-Module, kann aber auch auf diese Anwendung zusätzlich und einfach angepasst werden.

Bei Ausführungsbeispielen der Erfindung ist also die Vorderseite, die zur Lärmquelle ausgerichtet ist, in verschiedene Abschnitte unterteilt. Es gibt photoaktive Flächen, z. B. realisiert durch eingekapselte Solarzellen, schallabsorbierende Flächen, z. B. realisiert durch metallische Absorberkasetten, die einen Lochblechmantel haben und mit schallabsorbierenden Materialien gefüllt sind, und zusätzliche photo-inaktive Bereiche, z. B. für die mechanische Verbindung der unterschiedlichen Teilelemente.

Im Unterschied zum herkömmlichen Modul werden bei der Auslegung der Gestaltung des Modul-Layouts zusätzliche Randbedingungen implementiert, anstatt wie üblich die photoaktive Fläche zu maximieren. Dies ist im Folgenden weiter beschrieben:
Die einzelnen Teilelemente werden so ausgelegt, dass sie die Funktionalität der anderen Teilelemente möglichst wenig beeinträchtigen. Daher ist das PV-Modullayout so ausgestaltet, dass es beabsichtigt photo-inaktive Flächen gibt, über denen die anderen Teilelemente installiert sind. Diese Anpassung ist entscheidend für das Endprodukt, da falsch ausgelegte Belegungen zu systematischen Verschattungen im Betrieb führen können, welche zum einen den Ertrag mindern, zum anderen aber auch ein Sicherheitsrisiko darstellen, da verschattete Bereiche zusätzlich belastet werden.

Gleichermaßen sind die Absorberkassetten so ausgelegt, dass sie eine möglichst hohe Schallabsorption ermöglichen. Das kann insbesondere durch auskragende Formen, z. B. in Form von Dreiecken oder Trapezen realisiert sein, die durch Kanteneffekte eine höhere Schallwirkung erzielen. Höhe und Breite der Formen sind dabei so angepasst, dass die optische Wirkung (insb. Abschattung) und die akustische Wirkung möglichst gut aufeinander abgestimmt sind.

Den Absorberkassetten lassen sich eine projizierte Fläche zuordnen, die im Wesentlichen durch die Auflagefläche gegeben ist. Diese Fläche wird beim senkrechten Lichteinfall verschattet. Daher ist mindestens diese Fläche im ModulLayout als inaktiv vorzusehen.

Für die mechanische Anbindung der Absorberkassetten am Grundkörper ist es wesentlich, dass sie Absorberkassetten so gestaltet sind, dass ausreichende Auflageflächen zur Verfügung stehen. Dies kann z. B. durch zusätzliche Lippen oder Falze realisiert werden, die umlaufend oder auch lokal ausgeprägt sind. Diese Falze können nach außen oder nach innen ausgeführt sein.

Neben der Verschattung bei senkrechtem Lichteinfall wird eine Verschattung auch durch schrägen Einfall berücksichtigt. Hierbei kommt es darauf an, unter welchen Winkeln noch Licht eingefangen werden kann, was hauptsächlich durch die Anwendung definiert wird. Bei abgeschrägten Absorberkassetten ist der Winkel der Schräge mit dem gewünschten Einfallwinkel abzugleichen, um die projizierte Fläche zu bestimmen.

Anschließend kann das PV-Modul mit herkömmlichen Fertigungsprozessen hergestellt werden, wobei z. B. die herkömmliche Glasscheibe als äußerste Schicht eingesetzt werden kann.

Die Absorberkassetten können mit herkömmlichen Fertigungsprozessen gefertigt und z. B. mit üblichen schallabsorbierenden Absorbermaterialien gefüllt werden. Hier empfiehlt es sich, möglichst hoch-absorbierende Materialien auszuwählen, um eine möglichst hohe Gesamtschallabsorption zu erzielen. Es können jedoch auch weniger hoch absorbierende Materialien genutzt werden, wenn das Gesamtprodukt am Ende die in üblichen Genehmigungsverfahren angesetzten Schallabsorptionswerte erreicht.

Diese Optimierung kann experimentell oder durch Simulation durchgeführt werden. Dabei können auch die Anteile photo-inaktiver Fläche, bzw. die projizierte Fläche der Absorberkassetten in die Optimierung einbezogen werden, so dass die Teilelemente aufeinander abgestimmt sind.

Für die Kombination der Teilelemente können die gefüllten Absorberkasetten auf die Glasscheibe gelegt werden, wobei sie so ausgerichtet werden, dass in der senkrechten Aufsicht keine photoaktiven Flächen abgedeckt werden.

Um das PV-Modul und die aufliegenden Absorberkassetten klemmend einzufassen, kann ein herkömmlicher PV-Modulrahmen eingesetzt werden, der die außen liegenden Falze der Absorberkassetten umschließt. Dadurch kann eine stabile mechanische Anbindung der Absorberkassetten an dem Grundkörper realisiert werden.

Alternativ können die Falze auch genutzt werden, um die Kassetten mittels geeigneten Klebstoffen auf dem Glas zu fixieren. Dabei können die Falze auch nach innen, unter die projizierte Fläche der Absorberkassette ausgebildet werden, wodurch weniger nicht-photoaktive Fläche im Modullayout benötigt wird. Bei außen liegenden Falzen ist die Kombination mit mechanischer Klemmung weiter möglich, Natürlich lassen sich auch innen und außen liegende Falze kombinieren.

Darüber hinaus können andere Techniken zur Verbindung des einfassenden Rahmens und der Absorberkassette eingesetzt werden, wie z. B. Schweißen oder Löten. Hierzu kann auch die Form des Rahmens angepasst werden, um die Stabilität des Produkts zu verbessern oder den Herstellungsprozess zu vereinfachen. Außerdem kann der Rahmen an die Einbausituation in einer Lärmschutzwand angepasst werden. In diesen Fällen weicht der Rahmen stärker von herkömmlichen Rahmen für herkömmliche PV-Module ab.

Für bestimmte Situationen kann es wünschenswert sein, das Modul auch in den photo-inaktiven Bereichen mit Solarzellen zu belegen. Dies ist vor allem dann vorteilhaft, wenn auch von der zweiten Seite, die nicht der Lärmquelle zugewandt ist, Licht absorbiert werden soll.

Dennoch muss die Schädigung der Solarzellen auf der der Lärmquelle zugewandten Seite verhindert werden. Dafür müssen diese Solarzellen entweder in einer unabhängigen Reihenverschaltung geführt werden. Alternativ kann eine zweite Schicht von Solarzellen in das Modul integriert werden.

Im ersten Fall können die photoaktiven Flächen neben den Kassetten z. B. mit bifazialen Solarzellen ausgestattet sein. Für den zweiten Fall ist dies egal, da sie durch die zweite Schicht abgeschattet werden.

Zusammenfassend hat die erfindungsgemäße Lärmschutzwand folgende Wirkungen und Vorteile:
Durch die Abstimmung der Absorberkassetten und des PV-Modullayouts wird ein kombiniertes PV-Modul geschaffen, das Schallabsorption und elektrische Energieerzeugung in einem Element ermöglicht.

Durch das Zurückgreifen auf etablierte Fertigungsmethoden ist eine hohe Zuverlässigkeit des Produkts und eine schnelle Implementierung in bestehende Fertigungskapazitäten möglich.

Durch kombinierte Funktionalität benötigt das Element weniger Grundfläche als alternative auskragende Konstruktionen, bei denen die schallharte PV-Modul Glasseite von der Straße abgewandt ist.

Durch die bevorzugte Klemmung der dafür angepassten Teilelemente ist ein schneller und unkomplizierter Zusammenbau, bei gleichzeitig hoher mechanischer Stabilität und Dauerhaftigkeit ermöglicht.

Da das PV-Modul die Grundfläche des Elements abbildet, ist es möglich, durch die Glasscheibe eine hohe mechanische Stabilität zu erzeugen und einen hohen Schutz der eingekapselten Solarzellen zu ermöglichen. Zudem folgt die Fertigung etablierten Prozessen und ist daher sehr gut skalierbar, zuverlässig und kostengünstiger als alternative Ausführungen.

Durch die geschickte Ausgestaltung de Absorberkassetten und geeignete schallabsorbierende Materialien kann eine hohe Schallabsorption erzielt werden. Dabei wird die Schallwirkung höher ausfallen als wenn die projizierte Fläche mit einem flachen Absorber ausgestattet wäre.

Anhand der beigefügten Zeichnungen von Ausführungsbeispielen der Erfindung wird im Folgenden die Erfindung noch detaillierter beschrieben. Dabei zeigen:
- Fig. 1: eine Aufsicht eines von einem PV-Modul gebildeten Grundkörpers der Lärmschutzwand nach der Erfindung in schematischer Darstellung,
- Fig. 2a bis 2d: schematische Querschnitte von verschiedenen Formen von Absorberkassetten in Verbindung mit den auf den Grundkörper projizierten Flächen,
- Fig. 3a und 3b: schematische Querschnitte von Absorberkassetten mit verschieden ausgeführten Falzen,
- Fig. 4: eine Aufsicht auf eine Absorberkassettemit Teilen eines Rahmens zum Festklemmen der Absorberkassette in schematischer Darstellung, und
- Fig. 5a und 5b: schematische Querschnitte von PV-Modulen mit unterschiedlicher Belegung von Solarzellen.

In den Figuren werden die Bestandteile der Erfindung einheitlich mit folgenden Bezugszeichen beschrieben:
- 1: Grundkörper
- 2: photo-inaktiver Oberflächenabschnitt
- 3: photoaktiver Oberflächenabschnitt
- 4a, 4b, 4c: Solarzellen
- 5: Modulrahmen
- 5a: oberer Abschnitt
- 5b: unterer Abschnitt
- 6: Absorberkassette
- 7: Vorderseite
- 8: Auflagefläche
- 9: projizierte Fläche
- 10: innenliegender Falz
- 11: außenliegender Falz
- 11a: oberer Falzabschnitt
- 11b: unterer Falzabschnitt
- 12: vordere Schutzschicht
- 13: hintere Schutzschicht

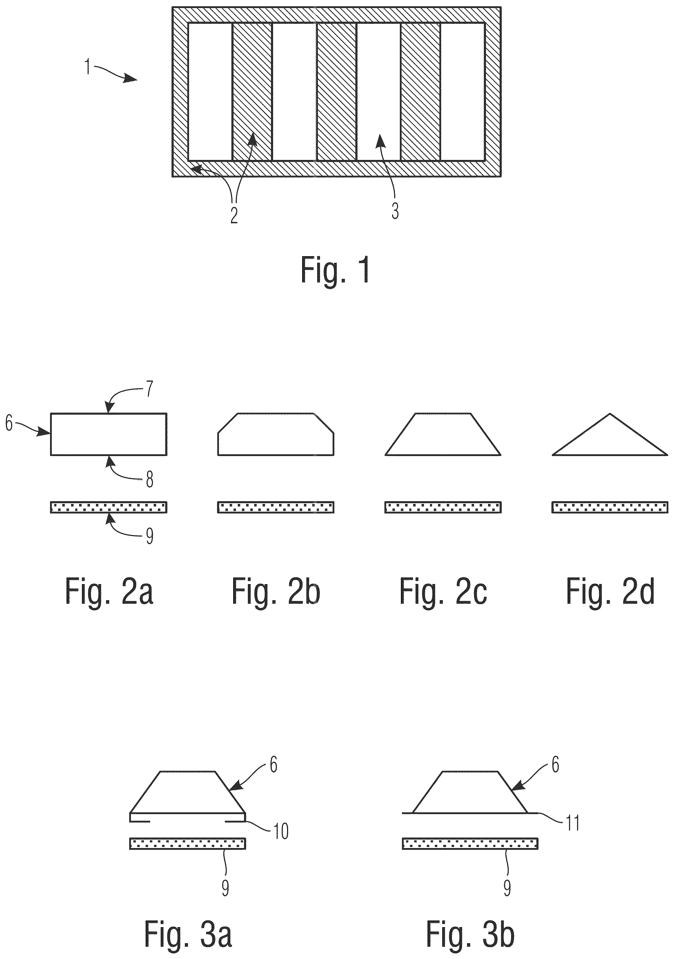

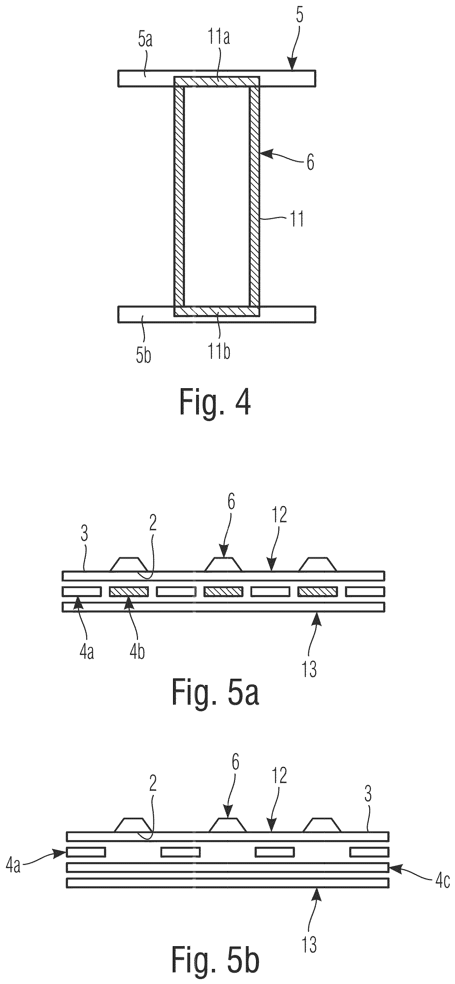

Wie aus den Zeichnungen ersichtlich, weist eine Lärmschutzwand nach der Erfindung einen plattenförmigen Grundkörper 1 auf, der von einem Photovoltaik-Modul ("PV-Modul") gebildet wird. In Fig. 1 ist eine schematische Aufsicht auf diejenige Seite (Vorderseite) des Grundkörpers 1 gezeigt, die einer nicht dargestellten Lärmquelle zugewandt ist. Im dargestellten Beispiel hat der Grundkörper 1 eine rechteckige Form. Die ebene Oberfläche des Grundkörpers ist in photo-inaktive Oberflächenabschnitte 2, die in Fig. 1 schraffiert dargestellt sind, und in photoaktive Oberflächenabschnitte 3, die in Fig. 1 als weiße, unschraffierte Felder dargestellt sind, unterteilt. Die photoaktiven Oberflächenabschnitte 3 sind solche Oberflächenabschnitte, unter denen eine Vielzahl von elektrisch miteinander verbundenen Solarzellen 4a im Grundkörper 1 eingebettet ist, wobei die Solarzellen 4a monofaziale oder bifaziale Solarzellen sein können. Im Falle von monofazialen Solarzellen 4a reagieren die Solarzellen 4a nur das durch die photoaktiven Oberflächenabschnitte 3 fallende Licht mit der Erzeugung von elektrischer Energie. Die Verwendung von bifazialen Solarzellen wird unten im Zusammenhang mit der Beschreibung der Fig. 5a und 5b näher beschrieben. Die photo-inaktiven Oberflächenabschnitte 2 sind hingegen solche Oberflächenabschnitte, die durch an dem Grundkörper 1 angebrachte Teile wie Modulrahmen 5 und Absorberkassetten 6 abgedeckt und damit verschattet sind, so dass kein Licht durch die photo-inaktiven Oberflächenabschnitte 2 ins Innere des Grundkörpers 1 dringen kann. Der in Fig. 1 am Rand des Grundkörpers 1 umlaufende photo-inaktive Oberflächenabschnitt 2 wird vom Modulrahmen 5 abgedeckt. Die drei in Fig. 1 innerhalb des vom Modulrahmen 5 abgedeckten, am Rand des Grundkörpers 1 umlaufenden Oberflächenabschnittes 2 angeordneten, streifenförmigen, parallelen, photo-inaktiven Oberflächenabschnitte 2 werden von den Absorberkassetten 6 abgedeckt, wobei die Anzahl der Absorberkassetten 6 und damit der von ihnen abgedeckten photo-inaktiven Oberflächenabschnitte 2 selbstverständlich größer oder kleiner als in Fig. 1 dargestellt sein kann. Die Anzahl der Absorberkassetten 6 und deren Anordnung am Grundkörper 1 bestimmen Form und Anzahl der photoaktiven Oberflächenabschnitte 3 des Grundkörpers 1. Es können daher selbstverständlich auch mehr oder weniger photoaktive Oberflächenabschnitte 3 und andere Formen von photoaktiven Oberflächenabschnitten 3 als in Fig. 1 dargestellt vorgesehen werden.

Mögliche Querschnittsformen der Absorberkassetten 6 sind schematisch in Fig. 2a bis 2d mit den jeweils unterhalb dieser Querschnittsformen dargestellten, von den Absorberkassetten 6 auf die Oberfläche des Grundkörpers 1 projizierten Flächen 9 dargestellt, wobei in Fig. 2a eine rechteckige, in Fig. 2b eine sechseckige, in Fig. 2c eine trapezförmige und in Fig. 2d eine dreieckige Querschnittsform der Absorberkassetten 6 dargestellt ist. Am Beispiel der in Fig. 2a dargestellten rechteckigen Querschnittsform einer Absorberkassettte 6 ist im zusammengebauten Zustand der Lärmschutzwand die Lage der Vorderseite 7 der Absorberkassette 5 und die Lage von deren Auflagefläche 8 am Grundkörper 1 angezeigt. Die Absorberkassetten 6 sind aus Metall gefertigt, wobei Lochblech aus Aluminium bevorzugt für die äußere Wand verwendet wird und poröse Absorbermaterialien für die Füllung der Kassetten 6 verwendet wird.

In den Fig. 3a und 3b sind anhand von im Querschnitt trapezförmigen Absorberkassetten 6 zwei Varianten von Falzen 10, 11 im Querschnitt gezeigt, mit denen die Absorberkassetten 6 am Grundkörper 1 mechanisch angebunden werden, wobei Fig. 3a eine Absorberkassette 6 mit einem innenliegenden Falz 10 zeigt und Fig. 3b eine Absorberkassette 6 mit einem außenliegenden Falz 11 zeigt. Zusätzliche zeigen die Fig. 3a und 3b die von den Absorberkassetten 6 projizierten Auflageflächen 9 am Grundkörper 1, wobei deutlich ist, dass die projizierte Fläche 9 bei der Absorberkassette 6 mit außenliegendem Falz 11 größer als die projizierte Fläche 9 bei der Absorberkassette 6 mit innenliegendem Falz 10 ist.

Wie in Fig. 4 gezeigt kann eine Absorberkassette 6, die einen umlaufenden außenliegenden Falz 11 aufweist, an ihrem in Fig. 4 oberen und unteren Ende am Modulrahmen 5 festgeklemmt werden, denn im dargestellten Beispiel überlappen sich der obere Abschnitt 11a des außenliegenden Falzes 11 und ein oberer Abschnitt 5a des Modulrahmens 5 und überlappen sich der untere Abschnitt 11b des außenliegenden Falzes 11 und ein unterer Abschnitt 5b des Modulrahmens 5. Die mit dem Modulrahmen 5 sich überlappenden Falzabschnitte 11a, 11b des außenliegenden Falzes 11 sind in Fig. 4 schraffiert dargestellt. Die Klemmung des außenliegenden Falzes 11 und des Modulrahmens 5 sorgt für eine stabile mechanische Anbindung der Absorberkassette 6 am vom Modulrahmen 5 eingefassten Grundkörper 1.

In den Fig. 5a und 5b sind zwei verschiedene Arten der Anordnung von Solarzellen 4a, 4b, 4c im Grundkörper 1 schematisch dargestellt, wobei diese Arten der Anordnung von Solarzellen 4a, 4b, 4c dann vorteilhaft sind, wenn Licht auch auf der von der Lärmquelle abgewandten Seite auf die Lärmschutzwand fällt und zur Solarstromgewinnung eingesetzt werden kann.

In Fig. 5a ist ein Ausschnitt einer Lärmschutzwand im Querschnitt schematisch gezeigt, wobei die Absorberkassetten 6 auf der der Lärmquelle zugewandten Vorderseite des Grundkörpers 1 angeordnet sind und die Vorderseite durch eine vordere Schutzschicht 12 gebildet wird, die z. B aus einer Glasscheibe bestehen kann Auf der Rückseite des Grundkörpers 1 befindet sich eine hintere Schutzschicht 13, die auch aus einer Glasscheibe bestehen kann. Zwischen den beiden Schutzschichten 12, 13 befindet sich eine Schicht von nebeneinander angeordneten Solarzellen 4a, 4b, von denen die nicht schraffiert dargestellten Solarzellen 4a bifaziale Solarzellen sind und jeweils seitlich versetzt zu den Absorberkassetten 6 angeordnet sind, so dass auf sie Licht sowohl durch die vordere Schutzschicht 12 als auch durch die hintere Schutzschicht 13 fallen kann und sie dieses beidseitig einfallende Licht in elektrische Energie umwandeln können. Direkt unter den Absorberkassetten 6 sind in Fig. 5a die schraffiert dargestellten Solarzellen 4b angeordnet, die einseitig photoaktiv sind und deshalb so orientiert sind, dass sie durch die hintere Schutzschicht 13 fallendes Licht empfangen und in elektrische Energie umwandeln können. Bei der in Fig. 5a dargestellten Anordnung von Solarzellen 4a, 4b sind benachbarte Solarzellen nicht miteinander verschaltet.

Die in Fig. 5b dargestellte Anordnung von Solarzellen 4a, 4c unterscheidet sich von der in Fig. 5a dargestellten Anordnung dadurch, dass die Solarzellen 4a, 4c in zwei übereinander angeordneten Schichten zwischen der vorderen Schutzschicht 12 und der hinteren Schutzschicht 13 angeordnet sind, wobei die Solarzellen 4a der in Fig. 5b oberen Schicht jeweils seitlich versetzt zu den Absorberkassetten 6 angeordnet sind und deshalb das durch die vordere Schutzschicht 12 fallende Licht empfangen und in elektrische Energie umwandeln. Die Solarzellen 4c der unteren Schicht sind so ausgerichtet, dass sie das durch die hintere Schutzschicht 13 fallende Licht empfangen und in elektrische Energie umwandeln. Die Solarzellen 4a, 4c können in Fig. 5b einseitig (monofazial) oder zweiseitig (bifazial) photoaktive Solarzellen sein, wobei wenn sie nur einseitig photoaktiv, also monofazial sind, ihre Ausrichtung so sein muss, dass sie entweder auf den Lichteinfall von vorne oder auf den Lichteinfall von hinten mit der Erzeugung von elektrischen Energie reagieren können.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Lärmschutzwand zur kombinierten Schallabsorption und Solarstromgewinnung, mit einem plattenförmigen Grundkörper (1), einer Vielzahl von im Grundkörper (1) eingekapselten Solarzellen (4a, 4b), mindestens einer auf wenigstens einer Seite des Grundkörpers (1) angeordneten, mit schallabsorbierendem Material gefüllten Absorberkassette (6) und Mitteln (5, 10, 11) zum Aneinander-Befestigen des Grundkörpers (1) und der Absorberkassette (6), wobei der Grundkörper (1) auf der einen Seite einen lichtdurchlässigen Oberflächenabschnitt (3) aufweist, der auf die eine Seite des Grundkörpers (1) fallendes Licht zu wenigstens einem Teil der Solarzellen (4a) hindurchtreten lässt, **dadurch gekennzeichnet, dass** die Absorberkassette (6) angrenzend an den lichtdurchlässigen Oberflächenabschnitt (3) am Grundkörper (1) anliegend angeordnet ist und einen weiteren Oberflächenabschnitt (2) des Grundkörpers (1) abdeckt, der in der gleichen Ebene wie der lichtdurchlässige Oberflächenabschnitt (3) liegt.

2. Lärmschutzwand nach Anspruch 1, **dadurch gekennzeichnet, dass** wenigstens zwei im seitlichen Abstand voneinander angeordnete Absorberkassetten (6) angrenzend an den lichtdurchlässigen Oberflächenabschnitt (3) am Grundkörper (1) anliegend angeordnet sind und jeweils einen jeweiligen Oberflächenabschnitt (2) des Grundkörpers (1) abdecken, wobei die von den Absorberkassetten (6) abgedeckten Oberflächenabschnitte (2) in der gleichen Ebene liegen wie der lichtdurchlässige Oberflächenabschnitt (3), der sich zwischen zwei benachbarten Absorberkassetten (6) befindet.

3. Lärmschutzwand nach Anspruch 1 oder 2, **dadurch gekennzeichnet, dass** mehr als zwei seitlich voneinander beabstandete Absorberkasetten (6) am Grundkörper (1) anliegend angeordnet sind, jede Absorberkassette (6) einen jeweiligen Oberflächenabschnitt (2) des Grundkörpers (1) abdeckt und mehrere lichtdurchlässige Oberflächenabschnitte (3) vorgesehen sind, die in der gleichen Ebene wie die von den Absorberkassetten (6) abgedeckten Oberflächenabschnitte (2) liegen, wobei sich zwischen jeweils zwei benachbarten Absorberkassetten (6) einer der lichtdurchlässigen Oberflächenabschnitte (3) befindet.

4. Lärmschutzwand nach einem der Ansprüche 1 bis 3, **dadurch gekennzeichnet, dass** der Grundkörper (1) einen oder zwei sich gegenüberliegende seitliche Randabschnitte aufweist und zwischen dem oder jedem seitlichen Rand und der benachbarten Absorberkassette (6) ein lichtdurchlässiger seitlicher Oberflächenabschnitt (3) angeordnet ist, und der oder jeder seitliche lichtdurchlässige Oberflächenabschnitt (3) an einen von einer Absorberkassette (6) abgedeckten Oberflächenabschnitt (2) grenzt, wobei der oder die seitlichen lichtdurchlässigen Oberflächenabschnitte (3) in der gleichen Ebene liegt bzw. liegen wie der oder die von dem oder den Absorberkassetten (6) abgedeckten Oberflächenabschnitte (3) des Grundkörpers (1).

5. Lärmschutzwand nach einem der Ansprüche 1 bis 4, **dadurch gekennzeichnet, dass** die oder jede Absorberkassette (6) durch Kleben und/oder Klemmen an dem Grundkörper (1) befestigt ist.

6. Lärmschutzwand nach einem der Ansprüche 1 bis 5, **dadurch gekennzeichnet, dass** der Grundkörper (1) von einem Rahmen (5) umgeben ist, der die oder jede Absorberkassette (6) am Grundkörper (1) festklemmt.

7. Lärmschutzwand nach einem der Ansprüche 1 bis 6, **dadurch gekennzeichnet, dass** die oder jede Absorberkassette (6) im Querschnitt rechteckig, dreieckig, sechseckig oder trapezförmig ist.

8. Lärmschutzwand nach einem der Ansprüche 1 bis 7, **dadurch gekennzeichnet, dass** die oder jede Absorberkassette (6) an ihrer dem Grundkörper (1) zugekehrten Basis einen innenliegenden oder außenliegenden Falz (10; 11) hat, der mit dem Grundkörper (1) in Anlage ist.

9. Lärmschutzwand nach einem der Ansprüche 1 bis 8, **dadurch gekennzeichnet, dass** der Grundkörper (1) zwei lichtdurchlässige Schichten (12, 13) aufweist, von denen eine Schicht (12) die Oberfläche des Grundkörpers (1) auf dessen eine Seite beinhaltet und von denen die andere Schicht (13) die Oberfläche des Grundkörpers auf dessen gegenüberliegenden Seite beinhaltet, und zwischen den beiden Schichten (12, 13) eine Schicht von Solarzellen (4a, 4b) eingekapselt ist, wobei jede Solarzelle (4a) einer ersten Teilmenge von Solarzellen beidseitig photoaktiv ist und jeweils in einem ersten Bereich des Grundkörpers (1) angeordnet ist, der jeweils seitlich neben dem oder jedem abgedeckten Oberflächenabschnitt (2) liegt, und wobei jede Solarzelle (4b) einer zweiten Teilmenge von Solarzellen einseitig photoaktiv ist und jeweils in einem zweiten Bereich des Grundkörpers angeordnet sind, der von der oder jeder Absorberkassette (6) verdeckt ist.

10. Lärmschutzwand nach einem der Ansprüche 1 bis 8, **dadurch gekennzeichnet, dass** der Grundkörper (1) zwei lichtdurchlässige Schichten (12, 13) aufweist von denen eine Schicht (12) die Oberfläche des Grundkörpers (1) auf dessen eine Seite beinhaltet und von denen die andere Schicht (13) die Oberfläche des Grundkörpers (1) auf dessen gegenüberliegenden Seite beinhaltet, und zwischen den beiden Schichten zwei Schichten von Solarzellen (4a, 4c) eingekapselt sind, wobei jede Solarzelle (4a) der einen Schicht von Solarzellen ein- oder beidseitig photoaktiv ist und jeweils in einem ersten Bereich des Grundkörpers angeordnet ist, der jeweils seitlich neben dem oder jedem abgedeckten Oberflächenabschnitt (2) liegt, und wobei jede Solarzelle (4c) der anderen Schicht von Solarzellen (4a, 4c) ein- oder beidseitig photoaktiv ist und jeweils in einem zweiten Bereich des Grundkörpers (1) angeordnet ist, der zwischen der einen Schicht von Solarzellen (4a) und der anderen lichtdurchlässigen Schicht (13) liegt.

11. Lärmschutzwand nach einem der Ansprüche 1 bis 10, **dadurch gekennzeichnet, dass** die Lärmschutzwand durch Verbinden mit wenigstens einer weiteren Lärmschutzschutzwand nach einem der vorhergehenden Ansprüche erweiterbar ist.

12. Mehrzahl von miteinander verbundenen Lärmschutzwänden, wobei die einzelnen Lärmschutzwände nach einem der Ansprüche 1 bis 10 ausgebildet sind.

## Claims

1. Noise barrier wall for combined sound absorption and solar power generation, comprising a plate-like main body (1), a large number of solar cells (4, 14, 15, 16) encapsulated in the main body (1), at least one absorber cartridge (6) arranged on at least one side of the main body (1) and filled with sound-absorbing material, and devices (5, 10, 11) for fastening the main body (1) and the absorber cartridge (6) to one another, the main body (1) having, on one side, a light-permeable surface section (3) which permits light that is incident on the one side of the main body (1) to pass through to at least some of the solar cells (4a), **characterized in that** the absorber cartridge (6) is arranged in a manner bearing against the main body (1) adjacent to the light-permeable surface section (3) and covers a further surface section (2) of the main body (1), which lies in the same plane as the light-permeable surface section (3).

2. Noise barrier wall according to claim 1, **characterized in that** at least two absorber cartridges (6) arranged at a lateral distance from one another are arranged in a manner bearing against the main body (1) adjacent to the light-permeable surface section (3) and cover in each case a respective surface section (2) of the main body (1), the surface sections (2) covered by the absorber cartridges (6) lying in the same plane as the light-permeable surface section (3) which is located between two adjacent absorber cartridges (6).

3. Noise barrier wall according to claim 1 or 2, **characterized in that** more than two absorber cartridges (6) that are laterally spaced apart from one another are arranged in a manner bearing against the main body (1), each absorber cartridge (6) covers a respective surface section (2) of the main body (1) and a plurality of light-permeable surface sections (3) are provided, which lie in the same plane as the surface sections ( 2) covered by the absorber cartridges (6), one of the light-permeable surface sections (3) being located between two adjacent absorber cartridges (6) in each case.

4. Noise barrier wall according to any one of claims 1 to 3, **characterized in that** the main body (1) has one or two opposite lateral edge sections and a light-permeable lateral surface section (3) is arranged between the or each lateral edge and the adjacent absorber cartridge (6), and the or each lateral light-permeable surface section (3) is adjacent to a surface section (2) covered by an absorber cartridge (6), the lateral light-permeable surface section or sections (3) lying in the same plane as the surface section or sections (3) of the main body (1) that is/are covered by the absorber cartridge or cartridges (6).

5. Noise barrier wall according to any one of claims 1 to 4, **characterized in that** the or each absorber cartridge (6) is attached to the main body (1) by adhering and/or clamping.

6. Noise barrier wall according to any one of claims 1 to 5, **characterized in that** the main body (1) is surrounded by a frame (5) which clamps the or each absorber cartridge (6) to the main body (1).

7. Noise barrier wall according to any one of claims 1 to 6, **characterized in that** the or each absorber cartridge (6) is rectangular, triangular, hexagonal or trapezoidal in cross section.

8. Noise barrier wall according to any one of claims 1 to 7, **characterized in that** the or each absorber cartridge (6) has, at its base facing the main body (1), an internal or external fold (10; 11) which is in abutment with the main body (1).

9. Noise barrier wall according to any one of claims 1 to 8, **characterized in that** the main body (1) comprises two light-permeable layers (12, 13), one layer (12) of which includes the surface of the main body (1) on one side thereof and the other layer (13) of which includes the surface of the main body on the opposite side thereof, and a layer of solar cells (4a, 4b) is encapsulated between the two layers (12, 13), each solar cell (4a) of a first subset of solar cells being photoactive on both sides and being arranged in each case in a first region of the main body (1) which in each case lies laterally adjacent to the or each covered surface section (2), and each solar cell (4b) of a second subset of solar cells being photoactive on one side and being arranged in each case in a second region of the main body, which is covered by the or each absorber cartridge (6).

10. Noise barrier wall according to any one of claims 1 to 8, **characterized in that** the main body (1) has two light-permeable layers (12, 13), one layer (12) of which includes the surface of the main body (1) on one side thereof and the other layer (13) of which includes the surface of the main body (1) on the opposite side thereof, and two layers of solar cells (4a, 4c) are encapsulated between the two layers, each solar cell (4a) of the one layer of solar cells being photoactive on one or both sides and being arranged in each case in a first region of the main body, which in each case is located laterally next to the or each covered surface section (2), and each solar cell (4c) of the other layer of solar cells being photoactive on one or both sides and being arranged in each case in a second region of the main body (1), which lies between the one layer of solar cells (4a) and the other light-permeable layer (13).

11. Noise barrier wall according to any one of claims 1 to 10, **characterized in that** the noise barrier wall can be extended by connecting it to at least one further noise barrier wall according to any one of the preceding claims.

12. Plurality of interconnected noise barrier walls, wherein the individual noise barrier walls are designed according to any one of claims 1 to 10.

## Revendications

1. Mur antibruit pour l'absorption acoustique combinée avec la production d'électricité par énergie solaire, comprenant un corps de base (1) en forme de plaque, une pluralité de cellules solaires (4a, 4b) encapsulées dans le corps de base (1), au moins une cassette d'absorption (6) remplie d'un matériau absorbant le son et disposée sur au moins un côté du corps de base (1), et des moyens (5, 10, 11) destinés à fixer le corps de base (1) et la cassette d'absorption (6) l'un à l'autre, le corps de base (1) présentant sur un côté une portion de surface translucide (3) qui laisse passer la lumière, tombant sur ledit côté du corps de base (1), vers au moins une partie des cellules solaires (4a),
**caractérisé en ce que** la cassette d'absorption (6) est disposée en appui contre le corps de base (1) de manière adjacente à la portion de surface translucide (3) et recouvre une autre portion de surface (2) du corps de base (1) qui se trouve dans le même plan que la portion de surface translucide (3).

2. Mur antibruit selon la revendication 1,
**caractérisé en ce qu'**au moins deux cassettes d'absorption (6) disposées à distance latérale l'une de l'autre sont disposées en appui contre le corps de base (1) de manière adjacente à la portion de surface translucide (3) et recouvrent chacune une portion de surface respective (2) du corps de base (1), les portions de surface (2) recouvertes par les cassettes d'absorption (6) se trouvant dans le même plan que la portion de surface translucide (3) qui se situe entre deux cassettes d'absorption (6) voisines.

3. Mur antibruit selon la revendication 1 ou 2,
**caractérisé en ce que** plus de deux cassettes d'absorption (6) espacées latéralement les unes des autres sont disposées en appui contre le corps de base (1), chaque cassette d'absorption (6) recouvrant une portion de surface respective (2) du corps de base (1), et
**en ce qu'**il est prévu plusieurs portions de surface translucides (3) qui se trouvent dans le même plan que les portions de surface (2) recouvertes par les cassettes d'absorption (6), l'une des portions de surface translucides (3) se trouvant entre deux cassettes d'absorption (6) respectives voisines.

4. Mur antibruit selon l'une des revendications 1 à 3,
**caractérisé en ce que** le corps de base (1) présente une ou deux portions de bord latérales opposées l'une à l'autre, et une portion de surface translucide (3) latérale est disposée entre le ou chaque bord latéral et la cassette d'absorption (6) voisine, et la ou chaque portion de surface translucide (3) latérale est adjacente à une portion de surface (2) recouverte par une cassette d'absorption (6), la ou les portions de surface translucides (3) latérales se trouvant dans le même plan que la ou les portions de surface (3) du corps de base (1) recouvertes par la ou les cassettes d'absorption (6).

5. Mur antibruit selon l'une des revendications 1 à 4,
**caractérisé en ce que** la ou chaque cassette d'absorption (6) est fixée au corps de base (1) par collage et/ou serrage.

6. Mur antibruit selon l'une des revendications 1 à 5,
**caractérisé en ce que** le corps de base (1) est entouré d'un cadre (5) qui fixe par serrage la ou chaque cassette d'absorption (6) au corps de base (1).

7. Mur antibruit selon l'une des revendications 1 à 6,
**caractérisé en ce que** la ou chaque cassette d'absorption (6) a une section transversale rectangulaire, triangulaire, hexagonale ou trapézoïdale.

8. Mur antibruit selon l'une des revendications 1 à 7,
**caractérisé en ce que** la ou chaque cassette d'absorption (6) présente, au niveau de sa base tournée vers le corps de base (1), une feuillure intérieure ou extérieure (10 ; 11) qui est en appui contre le corps de base (1).

9. Mur antibruit selon l'une des revendications 1 à 8,
**caractérisé en ce que** le corps de base (1) comporte deux couches translucides (12, 13), dont une couche (12) comprend la surface du corps de base (1) sur un côté de celui-ci et dont l'autre couche (13) comprend la surface du corps de base sur son côté opposé, et une couche de cellules solaires (4a, 4b) est encapsulée entre les deux couches (12, 13), chaque cellule solaire (4a) d'un premier sous-ensemble de cellules solaires étant photo-active des deux côtés et étant disposée dans une première zone du corps de base (1) située latéralement à côté de la ou de chaque portion de surface recouverte (2), et chaque cellule solaire (4b) d'un deuxième sous-ensemble de cellules solaires étant photo-active d'un seul côté et étant disposée dans une deuxième zone du corps de base (1) recouverte par la ou chaque cassette d'absorption (6).

10. Mur antibruit selon l'une des revendications 1 à 8,
**caractérisé en ce que** le corps de base (1) comporte deux couches translucides (12, 13), dont une couche (12) comprend la surface du corps de base (1) sur un côté de celui-ci et dont l'autre couche (13) comprend la surface du corps de base (1) sur son côté opposé, et deux couches de cellules solaires (4a, 4c) sont encapsulées entre les deux couches, chaque cellule solaire (4a) de l'une des couches de cellules solaires étant photo-active sur un ou deux côtés et étant disposée dans une première zone du corps de base qui est située latéralement à côté de la ou de chaque portion de surface recouverte (2), et chaque cellule solaire (4c) de l'autre couche de cellules solaires (4a, 4c) étant photo-active sur un ou deux côtés et étant disposée dans une deuxième zone du corps de base (1) qui est située entre ladite couche de cellules solaires (4a) et l'autre couche translucide (13).

11. Mur antibruit selon l'une des revendications 1 à 10,
**caractérisé en ce que** le mur antibruit peut être agrandi en le reliant à au moins un autre mur antibruit selon l'une des revendications précédentes.

12. Pluralité de murs antibruit reliés entre eux, les murs antibruit individuels étant conçus selon l'une des revendications 1 à 10.
